(19) Europäisches Patentamt
European Patent Office
Office européen des brevets

(11) **EP 1 716 342 B1**

(12) **EUROPÄISCHE PATENTSCHRIFT**

(45) Veröffentlichungstag und Bekanntmachung des Hinweises auf die Patenterteilung:
**13.02.2008 Patentblatt 2008/07**

(51) Int Cl.:
*F16C 33/12* *(2006.01)*   *F16C 33/20* *(2006.01)*

(21) Anmeldenummer: 05715417.1

(22) Anmeldetag: **21.02.2005**

(86) Internationale Anmeldenummer:
**PCT/EP2005/001765**

(87) Internationale Veröffentlichungsnummer:
**WO 2005/080810 (01.09.2005 Gazette 2005/35)**

(54) **GLEITLAGERVERBUNDWERKSTOFF**

SLIDE BEARING COMPOSITE MATERIAL

MATERIAU COMPOSITE DE PALIER COULISSANT

(84) Benannte Vertragsstaaten:
**DE FR GB**

(30) Priorität: **21.02.2004 DE 102004008633**

(43) Veröffentlichungstag der Anmeldung:
**02.11.2006 Patentblatt 2006/44**

(73) Patentinhaber: **KS Gleitlager GmbH**
**68789 St. Leon-Rot (DE)**

(72) Erfinder:
• **BICKLE, Wolfgang**
**68799 Reilingen (DE)**

• **SCHUBERT, Werner**
**69168 Wiesloch (DE)**
• **PASTERNAK, Axel**
**76669 Bad Schönbörn (DE)**

(74) Vertreter: **Friz, Oliver**
**Patentanwälte,**
**Dreiss, Fuhlendorf, Steimle & Becker,**
**Postfach 10 37 62**
**70032 Stuttgart (DE)**

(56) Entgegenhaltungen:
**EP-A- 0 232 922    EP-A- 0 852 298**
**DE-A1- 3 623 929    US-A- 4 394 275**
**US-A- 5 217 814**

EP 1 716 342 B1

**Beschreibung**

Die Erfindung betrifft einen Gleitlagerverbundwerkstoff mit einer metallischen Stützschicht, einer darauf aufgesinterten oder aufgespritzten metallischen, porösen Trägerschicht einer Dicke von 100 bis 500 $\mu$m, insbesondere von 200 bis 350 $\mu$m, und einer eine Gleitfläche für einen Gleitpartner bildenden Gleitschicht aus einem bleifreien Gleitschichtmaterial auf Polymerbasis, welches auch die Poren der Trägerschicht ausfüllt und die tribologischen Eigenschaften verbessernde Füllstoffe umfasst. Gleitlagerverbundwerkstoffe werden als Endlosbänder in kontinuierlichen Verfahren hergestellt. Sie werden dann insbesondere in Längsrichtung in mehrere Bänder geteilt und aufgehaspelt. Die Herstellung von Gleitlagerelementen erfolgt dann ausgehend von einem aufgehaspelten Gleitlagerverbundwerkstoff wiederum in Endlosverfahren, indem insbesondere nach Kantenbearbeitungsvorgängen, wie z. B. Strehlen, Längsabschnitte, sogenannte "Platinen", von dem endlosen Gleitlagerverbundwerkstoff in einer Herstellungsmaschine abgelängt und auf Schalenform gebogen oder in Buchsenform gerollt werden. Es ist auch möglich, dass dabei zusätzlich ein Bund bei der Schale oder Buchse gebildet wird, indem ein Randabschnitt der Platine "umgelegt" wird.

Auch ist es möglich, dass ausgehend von ebenen Platinenabschnitten eine sphärische Geometrie hergestellt wird.

Umformvorgänge bei Gleitlagerverbundwerkstoffen mit einem in eine poröse Trägerschicht einimprägnierten Gleitschichtmaterial auf Polymerbasis sind stets kritisch im Hinblick auf eine Verdrängung des Gleitschichtmaterials. Bei Gleitlagerelementen der vorstehend genannten Art ist die Gleitschicht der nach radial innen gewandten Seite des Gleitlagerelements bzw. des entsprechend umgeformten Gleitlagerverbundwerkstoffs zugewandt angeordnet. Es kommt hier also beim Biegen oder Rollen des Gleitlagerverbundwerkstoffs zu komprimierenden Vorgängen im metallischen Material der porösen Trägerschicht und in dem darin aufgenommenen Gleitschichtmaterial. Auf der radial äußeren Seite kommt es hingegen im Material der metallischen Stützschicht zumindest radial außen, also außerhalb der sogenannten "neutralen Faser" des Umformvorgangs, zu Zugspannungen. Die erwähnten Druckspannungen im Bereich der porösen Trägerschicht und des darin einimprägnierten Gleitschichtmaterials wirken sich dahingehend aus, dass die metallischen Partikel der Trägerschicht enger gegeneinander gedrängt werden, und zwar zu Lasten der Porosität, also zu Lasten des Porenvolumens der metallischen Trägerschicht. Dabei wird in die Trägerschicht bzw. in deren Poren einimprägniertes Gleitschichtmaterial in Richtung der Flächennormalen der Gleitschicht verdrängt. Auf diese Weise entsteht ein Wanddickenanstieg des Gleitschichtmaterials, und zwar was den Überstand des Gleitschichtmaterials über der metallischen porösen Trägerschicht betrifft. Dies ist nachteilig und beeinflusst die Maßhaltigkeit der aus dem Gleitlagerverbundwerkstoff herstellbaren gebogenen oder gerollten oder in sonstiger Weise umgeformten Gleitlagerelemente.

Vor dem Hintergrund, dass zur Ausbildung der Gleitschicht ein Überstand des Gleitschichtmaterials über der Trägerschicht je nach Gleitlagerelement und Anwendung variierend von 5 - 100 $\mu$m erreicht werden sollte, könnte man den erwarteten Wanddickenanstieg infolge Umformung des Gleitlagerverbundwerkstoffs von vornherein bei der Konfigurierung des Gleitlagerverbundwerkstoffs berücksichtigen, indem der Überstand des Gleitschichtmaterials über der Trägerschicht vor dem Umformen entsprechend dem erwarteten Wanddickenanstieg geringer gewählt wird. Es zeigt sich jedoch, dass dies wiederum zu extremen Qualitätsproblemen führt, und zwar aufgrund einer mangelhaften Überdeckung der Trägerschicht, wenn von vornherein ein nur sehr geringer Überstand gewählt wird. Dies bedeutet nämlich, dass die Gefahr besteht, dass bei einem geringen Überstand des Gleitschichtmaterials über der Trägerschicht die Trägerschicht, zumal aufgrund ihrer oberflächenrauhen Struktur, nicht vollständig und durchgehend von dem Gleitschichtmaterial überfangen oder bedeckt ist. Störstellen dieser Art lassen sich dann auch nicht durch eine Verdrängung des Gleitschichtmaterials in Dickenrichtung mit einem dadurch einhergehenden Wanddickenanstieg heilen. Aber auch ein weiterer Aspekt ist wesentlich: Endlose Gleitlagerverbundwerkstoffe werden in der Regel für die Produktion unterschiedlicher Gleitlagerelemente hergestellt und vorgehalten. Es wäre deshalb unwirtschaftlich, für bestimmte Anwendungen, also quasi auftraggebunden Werkstoffe mit geringeren Überständen herzustellen und vorzuhalten. Es werden je nach Anwendung Gleitlagerverbundwerkstoffe mit einem Überstand des Gleitschichtmaterials von 5 bis 100 $\mu$m benötigt, die aber vorzugsweise aus demselben Gleitlagerverbundwerkstoff hergestellt werden sollten.

Der vorliegenden Erfindung liegt die Aufgabe zugrunde, einen Gleitlagerverbundwerkstoff der eingangs genannten Art dahingehend zu verbessern, dass unter Beibehaltung einer guten Anbindung des Gleitschichtmaterials an die Trägerschicht ein qualitativ hochwertiges Gleitlagerelement durch Umformen des Gleitlagerverbundwerkstoffs erhalten werden kann, wobei die eingangs erwähnten Probleme beim Umformen nicht oder zumindest in geringerem Maße auftreten, als dies bislang der Fall ist.

Diese Aufgabe wird durch einen Gleitlagerverbundwerkstoff gemäß Anspruch 1 gelöst.

Es wurde in überraschender Weise festgestellt, dass bei verhältnismäßig hohen Porositäten der Trägerschicht im Ausgangsmaterial der vorausgehend beschriebene Wanddickenanstieg bei Umformvorgängen des Gleitlagerverbundwerkstoffs reduzierbar ist. Dies war zunächst nicht anzunehmen, da ja bei einem größeren mit Gleitschichtmaterial gefüllten Porenvolumen insgesamt mehr Material und anzunehmender Weise eher widerstandslos verdrängt werden kann. Es zeigte sich aber überraschenderweise, dass dies nicht der Fall ist. Die Verdrängung von Gleitschichtmaterial auf Polymerbasis ist vielmehr bei bekannten Gleitlagerverbundwerkstoffen mit einer porösen Trägerschicht aus regelmäßigen überwiegend sphärischen metallischen Partikeln mit einem Porositätsvolumen von nur etwa 30 % bezogen auf das Gesamtvolumen der porösen Trägerschicht um wenigstens 10 %, in Abhängigkeit von der Geometrie des Umformvorgangs auch um wenigstens 20 % größer. Auch wenn poröse Trägerschichten nicht aus kugelförmigen, sondern aus verrundet ausgebildeten knollenförmigen oder kartoffelförmigen metallischen Partikeln (jedoch ohne scharfe Kanten oder tiefe Einbuchtungen irregulärer Gestalt) gebildet sind, was üblicherweise mit einem Porositätsvolumen der Trägerschicht von etwa 35 % einhergeht, erweist sich der resultierende Wanddickenanstieg beim Umformen aus den erörterten Gründen als nachteilig und im Hinblick auf die zu erzielende Qualität als problematisch.

Mit der vorliegenden Erfindung wurde festgestellt, dass bei einer Ausbildung der Trägerschicht aus metallischen Partikeln einer durchweg irregulären oder unregelmäßigen, unrunden Geometrie, die als spratzig bezeichnet werden, was mit kantigen, bizarren Hintergriffsabschnitten innerhalb der Trägerschicht einhergeht, ein sehr hohes Porenvolumen von wenigstens 40 Vol.-% erreicht werden kann. Spratzige Partikel haben ein Längen/Breitenverhältnis von deutlich > 3, insbesondere von deutlich > 4 im Gegensatz zu regelmäßigen kugelförmigen Partikeln, die überwiegend ein Verhältnis von 1 - 1,1 aufweisen, und knolligen Partikeln, die ein Verhältnis von 1,5 - 3 jedoch ohne scharfe Kanten sondern mit verrundeter Gestalt aufweisen. Das mit spratzigen Partikeln erreichbare hohe Porenvolumen von wenigstens 40 Vol.-% in Verbindung mit der unregelmäßigen unrunden Geometrie der Partikel der Trägerschicht führt in überraschender Weise dazu, dass bei Umformvorgängen insgesamt weniger Gleitschichtmaterial aus den Poren der Trägerschicht nach radial innen verdrängt wird. Durch das größere Aufnahmevolumen für das Gleitschichtmaterial können durch den Umformvorgang bedingte Volumenverringerungen innerhalb der porösen Trägerschicht teilweise durch die Elastizität oder Kompressibilität des Gleitschichtmaterials aufgenommen werden, so dass dieses im Ergebnis weniger stark verdrängt wird. Aber auch das Haltevermögen der porösen Trägerschicht für das Gleitschichtmaterial ist aufgrund der größeren Porosität und der spratzigen Gestalt der die Trägerschicht bildenden metallischen Partikel verbessert. Die oberflächenoffenen Öffnungen oder Kanäle, welche das überstehende Gleitschichtmaterial an die Trägerschicht anbinden, haben solchenfalls auch nach dem Umformprozess eine größere Querschnittsfläche als dies der Fall wäre wenn mit Porositäten im bekannten Bereich von 30 - 35 % gearbeitet wird. Auch die von der regelmäßigen Kugelgestalt oder von der ebenfalls verrundeten Knollengestalt abweichende irreguläre unrunde Geometrie der spratzigen Partikel der Trägerschicht verbessert die Anbindung des Gleitschichtmaterials.

Zur Herstellung der Trägerschicht werden vorzugsweise spratzige Pulverpartikel aus Zinn-Bronze-Legierung (CuSn8-12) eingesetzt, die eine Fülldichte von 2,7 - 4,2 aufweisen. Unter der Fülldichte eines spezifischen Pulvermaterials (einer Charge) wird bei einer Befüllung eines vorgegebenen Volumens durch lose Schüttung des Pulvers derjenige Faktor verstanden, der multipliziert mit derjenigen Masse von Wasser, die dasselbe Volumen ausfüllen würde, die Masse des Pulvers ergibt. Bei Ausfüllung eines Volumens von 100 cm$^3$ durch ein lose geschüttetes Pulver würde sich somit eine Masse des Pulvers von 270 - 420 g ergeben. Dieser Wert der Fülldichte hängt bei gegebener Legierungszusammensetzung (und somit gegebenem spezifischem Gewicht) von der Geometrie des Pulvers ab.

Die spratzigen metallischen Pulverpartikel zur Bildung der porösen Trägerschicht haben vorteilhafterweise eine charakteristische Korngröße von 75 - 110 μm. Unter der charakteristischen Korngröße wird derjenige Größenwert in μm verstanden, bezüglich dem 50 Massen-% einer betrachteten Charge eine größere Korngröße aufweisen und 50 Massen-% eine geringere Korngröße aufweisen. Es handelt sich also um eine mittlere Partikelgröße. Die Korngrößenverteilung wird durch Siebrückstandsuntersuchungen für eine betreffende Charge bestimmt. Das Ergebnis kann entweder (nicht kumuliert) in Massen-% für eine jeweilige Maschenweite angegeben werden oder kumuliert nach DIN ISO 4497 (so dass bei der geringsten Maschenweite nahezu 100 Massen-% ermittelt wird). Der kumulierte Siebrückstand kann durch eine Verteilungsfunktion angegeben werden, nämlich

$$R = e^{-\left(\frac{t}{\eta}\right)^{\beta}}$$

R = kumulierter Siebrückstand
t = Maschenweite
η = charakteristische Korngröße
β = Formparameter (=Steigung der Geraden bei logarithmischer Auftragung nach DIN 66 145).

Eine bevorzugte Korngrößenverteilung ist gekennzeichnet durch einen Formparameter β von 2,5 - 5 und eine charakteristische Korngröße im oben angegebenen Bereich.

Die poröse Trägerschicht weist vorteilhafterweise ein Porenvolumen von wenigstens 41 %, insbesondere von wenigstens 42 %, insbesondere von wenigstens 43 %, insbesondere von wenigstens 44 % und besonders bevorzugter Maßen von wenigstens 45 Vol.-% auf.

Es versteht sich, dass der Wanddickenanstieg, womit nur der Anstieg des Überstands des Gleitschichtmaterials über der porösen Trägerschicht gemeint ist, von der Wanddicke und von der Stärke der Umformung, insbesondere vom Durchmesser einer Schalen- oder Buchsenform abhängt. Je größer die Wanddicke $S_3$ eines Gleitlagerverbundwerkstoffs (gemessen über alle Schichten) und je geringer der Außendurchmesser einer Schalen- oder Buchsenform (von Außenseite zu Außenseite der Stützschicht gemessen) ist, desto stärker sind die Druckspannungen und die Verringerung des Porenvolumens an der Innenseite des herzustellenden Gleitlagerelements. Die Wanddickenzunahme a (in $\mu$m) bei der Gleitschicht (Überstand über der Trägerschicht) bei einem erfindungsgemäßen Gleitschichtmaterial, das auf Schalen- oder Buchsenform umgeformt wird, genügt der Beziehung

$$a = b \cdot e^{c \cdot \frac{S_3}{d_2}}$$

mit 0,0035 < b < 0,0045 und 9,2 < c < 9,7, wobei $S_3$ die Wanddicke des Gleitlagerverbundwerkstoffs und $d_2$ den Außendurchmesser der Buchsen- oder Schalenform bezeichnet.

Die Porosität der aus aufgesinterten oder aufgespritzten metallischen Partikeln irregulärer Geometrie gebildeten porösen Trägerschicht kann durch Bestimmung des Verhältnisses des Flächenanteils der Poren zur Gesamtquerschnittsfläche der porösen Trägerschicht in einem metallografischen Schliff in Prozent berechnet und angegeben werden. Hierzu kann von einem Gleitlagerverbundwerkstoff nach dem Einimprägnieren des Gleitschichtmaterials ein metallografischer Schliff senkrecht zur Bandebene hergestellt werden. Es wird dann der Flächeninhalt der im Schnitt erscheinenden Bronze-Bestandteile mit einem Mikroskop durch Umfangsabtastung bestimmt. Dieser Flächeninhalt wird von der Gesamtquerschnittsfläche der Trägerschicht subtrahiert. Die restliche Fläche entfällt dann auf die Poren und kann als prozentualer Anteil zur Gesamtfläche als Porosität angegeben werden. Eine Auswertung von fünf verschiedenen Schliffen desselben Gleitlagerverbundwerkstoffs im Abstand weniger Zehntel Millimeter führt zu hinreichend genauen Werten.

Das Gleitschichtmaterial eines erfindungsgemäßen Gleitlagerverbundwerkstoffs beruht auf PVDF-Basis oder PES-Basis oder PPS-Basis oder PA-Basis. Das erfindungsgemäße Gleitschichtmaterial umfasst nach einer Ausführungsform der Erfindung wenigstens 50 Vol.-% PVDF und weiter insbesondere wenigstens 60 Vol.-% PVDF, insbesondere 60 - 85 Vol.-% PVDF. Es umfasst nach einer weiteren Ausführungsform der Erfindung wenigstens 60 Vol.-% PES oder PPS, insbesondere 60 - 85 Vol.-% PES oder PPS, oder wenigstens 60 Vol.-% PA, insbesondere 60 - 85 Vol.-% PA.

Gleitschichtmaterialien auf PES-Basis mit wenigstens 50, vorzugsweise wenigstens 60 Vol.-% PES sind für den Einsatz bei höheren Betriebstemperaturen, insbesondere bei Dauergebrauchstemperaturen von etwa bis zu 140 °C geeignet.

Das Polymere Gleitschichtmaterial kann in vorteilhafter Weise des Weiteren wenigstens 5, insbesondere wenigstens 8 Vol.-% und weiter insbesondere wenigstens 10 Vol.-% PTFE umfassen.

Durch den Zusatz von PTFE als Schmierstoff werden die tribologischen Eigenschaften nachhaltig positiv beeinflusst. Ein zunehmender Gehalt an PTFE macht den Gleitlagerverbundwerkstoff aber anfälliger für Strömungserosion bei extremen Belastungen. Aus diesem Grund erweist sich beispielsweise eine Gleitlagerbuchse für Stoßdämpferanwendungen für Schlechtwegstrecken (extreme Belastung) mit einem hohen PTFE-Gehalt oder gar auf PTFE-Basis als weniger geeignet. Solche Gleitlagerbuchsen für Stoßdämpferanwendungen beruhen daher eher auf PVDF- oder PES-Basis und umfassen gegebenenfalls Zusätze von nur ca. 5 bis 12 Vol.-% PTFE.

Die eingangs optional erwähnten Füllstoffe können beispielsweise Zinksulfid oder Bariumsulfat mit einem Anteil von wenigstens 5 Vol.-%, insbesondere wenigstens 8 Vol.-% und weiter insbesondere von 8 bis 12 Vol.-% bezogen auf das Gleitschichtmaterial im Ausgangszustand betragen.

Das Gleitschichtmaterial umfasst wenigstens 5 Vol.-%, insbesondere wenigstens 8 Vol.-% und weiter insbesondere 8 bis 12 Vol.-% Graphit als die tribologischen Eigenschaften verbessernder Schmierstoff.

Die Zugabe von wenigstens 2 Vol.-%, insbesondere von 2 bis 6 Vol.-% Kohlenstofffasern erweist sich ebenfalls als vorteilhaft, da hierdurch die Belastbarkeit, also die Tragfähigkeit, des Gleitschichtmaterials bzw. der hierdurch gebildeten Gleitschicht erhöht werden kann.

Die poröse Trägerschicht ist vorzugsweise aus Zinn-Bronze-Partikeln, insbesondere aus CuSn (8-12)-Partikeln gebildet. Die Stützschicht des Gleitlagerverbundwerkstoffs kann aus Stahl oder aus Bronze bestehen.

Die vorliegende Erfindung betrifft auch eine Gleitlagerbuchse, hergestellt aus einem Gleitlagerverbundwerkstoff, nach einem oder mehreren der Ansprüche 1 bis 13. Die Erfindung betrifft des weitere eine Gleitlagerbuchse für Stoßdämpferanwendungen mit den Merkmalen des Anspruchs 14.

Weitere Merkmale, Einzelheiten und Vorteile der Erfindung ergeben sich aus den beigefügten Patentansprüchen und aus der zeichnerischen Darstellung und nachfolgenden Beschreibung bevorzugter Ausführungsformen des erfindungsgemäßen Gleitlagerverbundwerkstoffs. In der Zeichnung zeigt:

Figur 1    eine schematische Schnittansicht durch einen erfindungsgemäßen Gleitlagerverbundwerkstoff und

Figur 2    der ermittelte Wanddickenanstieg in Abhängigkeit des Verhältnisses von Wandstärke des Gleitlagerverbundwerkstoffs zum Buchsendurchmesser.

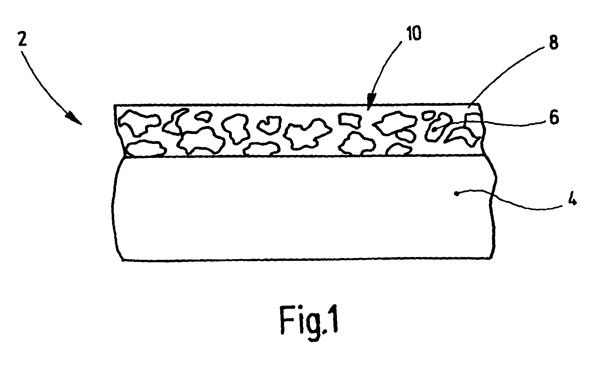

Figur 1 zeigt einen insgesamt mit dem Bezugszeichen 2 bezeichneten Gleitlagerverbundwerkstoff mit einer metallischen Stützschicht 4 aus Stahl und einer metallischen porösen Trägerschicht 6, die ein Porenvolumen bezogen auf das Volumen der Trägerschicht von wenigstens 40 Vol.-% begrenzt. Man erkennt ferner Gleitschichtmaterial 8 auf Polymerbasis, welches nicht nur die Poren der Trägerschicht 6 vorzugsweise vollständig ausfüllt, sondern auch einen eine Gleitschicht 10 bildenden Überstand über der porösen Trägerschicht 6 bildet. Die Gleitschicht 10 bzw. das die Gleitschicht 10 bildende Gleitschichtmaterial 8 muss so weit wie möglich die Trägerschicht 6 vollständig überdecken, ohne dass oberflächenoffene Risse, Spalte oder Öffnungen auftreten. Es soll also eine vorzugsweise 100 %-ige Überdeckung der porösen Trägerschicht schon im Ausgangszustand des Gleitlagerverbundwerkstoffs, also vor dem Umformen zur Bildung von Gleitelementen, erreicht sein.

Nachfolgend sind bevorzugte Zusammensetzungen des bleifreien Gleitschichtmaterials angegeben.

    1. PA 67 Vol.-%
    PTFE 10 Vol.-%
    ZnS 10 Vol.-%
    Graphit 10 Vol.-%
    C-Fasern 3 Vol.-%
    2. PVDF 67 Vol.-%
    PTFE 10 Vol.-%
    ZnS 10 Vol.-%
    Graphit 10 Vol.-%
    C-Fasern 3 Vol.-%
    3. PVDF 67 Vol.-%
    PTFE 10 Vol.-%
    $BaSO_4$ 10 Vol.-%
    Graphit 10 Vol.-%
    C-Fasern 3 Vol.-%
    4. PES 70 Vol.-%
    PTFE 10 Vol.-%
    PPSU 10 Vol.-%
    $BaSO_4$ 5 Vol.-%
    $TiO_2$ 5 Vol.-%
    5. PPS 70 Vol.-%
    PTFE 10 Vol.-%
    PPSU 10 Vol.-%
    $BaSO_4$ 5 Vol.-%
    $TiO_2$ 5 Vol.-%

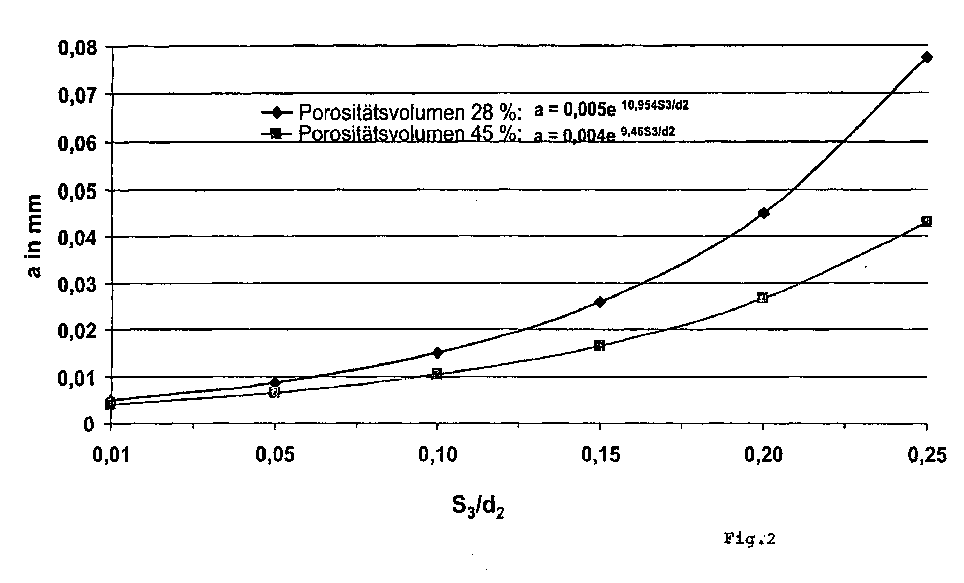

Der in Figur 2 dargestellte Wanddickenanstieg a in Abhängigkeit des Verhältnisses ($S_3/d_2$) (Wandstärke des Gleitlagerverbundwerkstoffs / Außendurchmesser einer hieraus gerollten Buchse) wurde bei zwei Gleitlagerverbundwerkstoffen bestimmt, die sich im Porositätsvolumen unterscheiden und 28 Vol.-% bzw. 45 Vol.-% aufweisen. Es handelt sich dabei um einen Gleitlagerverbundwerkstoff mit einer Stützschicht aus Stahl, einer porös aufgesinterten Trägerschicht aus kugelförmigen CuSn10-Bronzepartikeln (bei 28 Vol.-%) und aus spratzigen CuSn10-Bronzepartikeln (bei 45 Vol.-%), die mit einer auf PTFE-Basis beruhenden Gleitschicht gefüllt war.

Beispielsweise ergibt sich bei einer aus diesem Gleitlagerverbundwerkstoff gerollten Gleitlagerbuchse mit 11 mm Innendurchmesser und einer Wandstärke des Gleitlagerverbundwerkstoffs von 1 mm ein Verhältnis von $S_3/d_2$ von 0,091. Man entnimmt den Kurven in der Figur 2 einen Unterschied des Wanddickenanstiegs von ca. 2 $\mu$m, also einen Unterschied in der Größenordnung von etwa 20 % der getesteten Werkstoffe.

## Patentansprüche

1. Gleitlagerverbundwerkstoff (2) mit einer metallischen Stützschicht (4), einer darauf aufgesinterten oder aufgespritzten metallischen, porösen Trägerschicht (6) einer Dicke von 100 - 500 $\mu$m, insbesondere von 200 - 350 $\mu$m, und einer eine Gleitfläche für einen Gleitpartner bildenden Gleitschicht (10) aus einem Gleitschichtmaterial (8) auf Polymerbasis, welches auch die Poren der Trägerschicht (6) ausfüllt und die tribologischen Eigenschaften verbessernde Füllstoffe umfasst und wobei die poröse Trägerschicht (6) aus spratzigen Partikeln einer durchweg unregelmäßigen unrunden Geometrie gebildet ist und ein Porenvolumen von wenigstens 40 - 48 Vol.-% vor dem Biegen oder Rollen auf Schalenform oder Buchsenform aufweist und wobei das Gleitschichtmaterial einen Überstand über der porösen Trägerschicht von 5 - 100 $\mu$m bildet und bleifrei ausgebildet ist und wenigstens 50 Vol.-% PVDF oder wenigstens 60 Vol.-% PA oder PES oder PPS umfasst.

2. Gleitlagerverbundwerkstoff nach Anspruch 1, **dadurch gekennzeichnet, dass** die Korngrößenverteilung der metallischen Partikel eine charakteristische Korngröße von 75 - 110 $\mu$m aufweist.

3. Gleitlagerverbundwerkstoff nach Anspruch 1 oder 2, **dadurch gekennzeichnet, dass** die Korngrößenverteilung der metallischen Partikel durch einen Formparameter β von 2,5 - 5 bezeichnet ist.

4. Gleitlagerverbundwerkstoff nach Anspruch 1, 2 oder 3, **dadurch gekennzeichnet, dass** die Wanddickenzunahme bei der Gleitschicht beim Biegen des Gleitschichtmaterials auf Schalen- oder Buchsenform der Beziehung

$$a = b \cdot e^{c \cdot \frac{S_3}{d_2}}$$

genügt, mit 0,0035 < b < 0,0045 und 9,2 < c < 9,7, insbesondere mit 0,0038 < b < 0,0042 und 9,4 < c < 9,5, wobei $S_3$ die Wanddicke des Gleitlagerverbundwerkstoffs und $d_2$ den Außendurchmesser der Buchsen- oder Schalenform bezeichnet.

5. Gleitlagerverbundwerkstoff nach einem oder mehreren der vorstehenden Ansprüche, **dadurch gekennzeichnet, dass** die poröse Trägerschicht (6) ein Porenvolumen von wenigstens 41 %, insbesondere von wenigstens 42 %, insbesondere von wenigstens 43 %, insbesondere von wenigstens 44 % und weiter insbesondere von wenigstens 45 % aufweist.

6. Gleitlagerverbundwerkstoff nach Anspruch 5, **dadurch gekennzeichnet, dass** die poröse Trägerschicht (6) ein Porenvolumen von 43 - 48 % aufweist.

7. Gleitlagerverbundwerkstoff nach Anspruch 1, **dadurch gekennzeichnet, dass** das Gleitschichtmaterial (8) wenigstens 60 Vol.-% PVDF umfasst.

8. Gleitlagerverbundwerkstoff nach einem oder mehreren der vorstehenden Ansprüche, **dadurch gekennzeichnet, dass** das Gleitschichtmaterial (8) wenigstens 5, insbesondere wenigstens 8 Vol.-% und weiter insbesondere wenigstens 10 Vol.-% PTFE umfasst.

9. Gleitlagerverbundwerkstoff nach einem oder mehreren der vorstehenden Ansprüche, **dadurch gekennzeichnet, dass** das Gleitschichtmaterial (8) wenigstens 5 Vol.- %, insbesondere wenigstens 8 Vol.- % und weiter insbesondere 8 - 12 Vol.- % Zinksulfid und/oder Bariumsulfat umfasst.

10. Gleitlagerverbundwerkstoff nach einem oder mehreren der vorstehenden Ansprüche, **dadurch gekennzeichnet, dass** das Gleitschichtmaterial (8) wenigstens 5 Vol.- %, insbesondere wenigstens 8 Vol.- % und weiter insbesondere 8 - 12 Vol.- % Graphit umfasst.

11. Gleitlagerverbundwerkstoff nach einem oder mehreren der vorstehenden Ansprüche, **dadurch gekennzeichnet, dass** das Gleitschichtmaterial (8) wenigstens 2 Vol.- %, insbesondere 2 - 6 Vol.-% Kohlenstofffasern umfasst.

12. Gleitlagerverbundwerkstoff nach einem oder mehreren der vorstehenden Ansprüche, **dadurch gekennzeichnet, dass** die poröse Trägerschicht (6) aus Zinnbronze-Partikeln, insbesondere aus CuSn (8-12)-Partikeln gebildet ist.

13. Gleitlagerverbundwerkstoff nach einem oder mehreren der vorstehenden Ansprüche, **dadurch gekennzeichnet, dass** die Stützschicht (4) aus Stahl oder aus Bronze besteht.

14. Gleitlagerbuchse, hergestellt aus einem Gleitlagerverbundwerkstoff nach einem oder mehreren der vorstehenden Ansprüche.

15. Gleitlagerbuchse nach Anspruch 14, mit einem Außendurchmesser von 10 - 15 mm, insbesondere von 10 - 13 mm und mit einem Überstand des Gleitschichtmaterials über der porösen Trägerschicht von 10 - 30 μm, insbesondere von 10 - 25 μm und weiter insbesondere von 12 - 20 μm, wobei das Gleitschichtmaterial die poröse Trägerschicht vollständig überdeckt.

**Claims**

1. Slide bearing composite material (2) comprising a metallic support layer (4), a metallic porous carrier layer (6) sintered or sprayed thereon and having a thickness of between 100 and 500 μm, in particular between 200 and 350 μm, and a sliding layer (10), forming the sliding surface for a sliding partner and made from a sliding layer material (8) on the basis of a polymer, which also fills the pores of the carrier layer (6) and comprises fillers which improve the tribological properties, wherein the porous carrier layer (6) is formed from spattered particles having a continuously irregular, non-circular geometry and has a pore volume of at least 40 vol.-% to 48 vol.-% prior to shaping into bushing or shell shape and wherein the sliding surface layer forms a projection past the porous carrier layer of 5 to 100 μm and contains no lead and comprises at least 50 vol.-% of PVDF or at least 60 vol.-% of PA or PES or PPS.

2. Slide bearing composite material according to claim 1, **characterized in that** the grain size distribution of the metallic particles has a characteristic grain size of 75 to 110 μm.

3. Slide bearing composite material according to claim 1 or 2, **characterized in that** the grain size distribution of the metallic particles is **characterized by** a shape parameter β of 2.5 to 5.

4. Slide bearing composite material according to claim 1, 2 or 3, **characterized in that** the wall thickness increase of the sliding layer during bending of the sliding layer material into a shell or bushing shape satisfies the relationship

$$a = b \cdot e^{\frac{c \cdot S_3}{d_2}}$$

with 0.0035 < b < 0.0045 and 9.2 < c < 9.7, in particular with 0.0038 < b < 0.0042 and 9.4 < c < 9.5, wherein $S_3$ is the wall thickness of the slide bearing composite material and $d_2$ is the outer diameter of the bushing or shell shape.

5. Sliding layer composite material according to any one or more of the preceding claims, **characterized in that** the porous carrier layer (6) has a pore volume of at least 41 %, in particular of at least 42 %, in particular of at least 43 %, in particular of at least 44 % and moreover preferentially at least 45 %.

6. Slide bearing composite material according to claim 5, **characterized in that** the porous carrier layer (6) has a pore volume of 43 to 48 %.

7. Slide bearing composite material according to claim 1, **characterized in that** the sliding layer material (8) comprises at least 60 vol.-% of PVDF.

8. Slide bearing composite material according to one or more of the preceding claims, **characterized in that** the sliding layer material (8) comprises at least 5, in particular, at least 8 vol.-% and moreover at least 10 vol.-% of PTFE.

9. Slide bearing composite material according to one or more of the preceding claims, **characterized in that** the sliding layer material (8) comprises at least 5 vol.-%, in particular, at least 8 vol.-% and moreover in particular 8 to 12 vol.-% of zinc sulphide and/or barium sulphate.

10. Slide bearing composite material according to one or more of the preceding claims, **characterized in that** the sliding layer material (8) comprises at least 5 vol.-%, in particular, at least 8 vol.-% and moreover in particular 8 to 12 vol.-% of graphite.

11. Slide bearing composite material according to one or more of the preceding claims, **characterized in that** the sliding layer material (8) comprises at least 2 vol.-%, and in particular 2 to 6 vol.-%, of carbon fibers.

12. Slide bearing composite material according to one or more of the preceding claims, **characterized in that** the porous carrier layer (6) is formed from tin bronze particles, in particular of CuSn (8-12) particles.

13. Slide bearing composite material according to one or more of the preceding claims, **characterized in that** the support layer (4) consists of steel or bronze.

14. Slide bearing bushing, produced from a slide bearing composite material according to one or more of the preceding claims.

15. Slide bearing bushing according to claim 14, having an outer diameter of 10 to 15 mm, in particular 10 to 13 mm, and wherein the sliding layer material projects past the porous carrier layer by 10 to 30 $\mu$m, in particular 10 to 25 $\mu$m, and moreover in particular 12 to 20 $\mu$m, wherein the sliding layer material completely covers the porous carrier layer.

**Revendications**

1. Matériau composite pour palier lisse (2) avec une couche d'appui métallique (4) et, rapportée sur celle-ci par agglomération par frittage ou par projection, une couche support poreuse métallique (6) de 100 à 500 $\mu$m d'épaisseur, et notamment de 200 à 350 $\mu$m, ainsi qu'avec une couche de glissement (10) qui forme une surface de glissement pour un élément glissant antagoniste et est réalisée dans un matériau pour couche de glissement (8) à base de polymère, lequel matériau comble également les pores de la couche support (6) et comprend des charges améliorant les propriétés tribologiques, ladite couche support poreuse (6) étant formée de particules irrégulières de géométrie ovale tout à fait irrégulière et présentant un volume poreux d'au moins 40 à 48 % en volume avant cintrage ou enroulement selon une forme de coquille ou de coussinet et le matériau de la couche de glissement dépassant d'environ 5 à 100 $\mu$m de la couche support poreuse, étant exempt de plomb et comprenant au moins 50 % en volume de PVDF ou au moins 60 % en volume de PA, PES ou PPS.

2. Matériau composite pour palier lisse selon la revendication 1, **caractérisé en ce que** la distribution granulométrique des particules métalliques présente une grosseur de grain caractéristique de 75 à 110 $\mu$m.

3. Matériau composite pour palier lisse selon la revendication 1 ou la revendication 2, **caractérisé en ce que** la distribution granulométrique des particules métalliques est **caractérisée par** un paramètre de forme β compris entre 2,5 et 5.

4. Matériau composite pour palier lisse selon l'une quelconque des revendications 1, 2 ou 3, **caractérisé en ce que** l'augmentation de l'épaisseur de paroi au niveau de la couche de glissement lors du cintrage du matériau de la couche de glissement selon une forme de coquille ou de coussinet répond à l'équation

$$a = b \cdot e^{c \cdot \frac{S_3}{d_2}}$$

avec 0,0035 < b < 0,0045 et 9,2 < c < 9,7, en particulier avec 0,0038 < b < 0,0042 et 9,4 < c < 9,5, $S_3$ désignant l'épaisseur de paroi du matériau composite pour palier lisse et $d_2$ le diamètre extérieur de la forme de coussinet ou de coquille.

**5.** Matériau composite pour palier lisse selon une ou plusieurs des revendications précédentes, **caractérisé en ce que** la couche support poreuse (6) présente un volume poreux supérieur ou égal à 41%, notamment supérieur ou égal à 42 % et en particulier supérieur ou égal à 43 %, notamment supérieur ou égal à 44 % et en particulier encore supérieur ou égal à 45 %.

**6.** Matériau composite pour palier lisse selon la revendication 5, **caractérisé en ce que** la couche support poreuse (6) présente un volume poreux compris entre 43 et 48 %.

**7.** Matériau composite pour palier lisse selon la revendication 1, **caractérisé en ce que** le matériau de la couche de glissement (8) comprend au moins 60 % en volume de PVDF.

**8.** Matériau composite pour palier lisse selon une ou plusieurs des revendications précédentes, **caractérisé en ce que** le matériau de la couche de glissement (8) comprend au moins 5, notamment au moins 8 % en volume et en particulier au moins 10 % en volume de PTFE.

**9.** Matériau composite pour palier lisse selon une ou plusieurs des revendications précédentes, **caractérisé en ce que** le matériau de la couche de glissement (8) comprend au moins 5 % en volume, notamment au moins 8 % en volume et en particulier 8 à 12 % en volume de sulfure de zinc et/ou de sulfate de baryum.

**10.** Matériau composite pour palier lisse selon une ou plusieurs des revendications précédentes, **caractérisé en ce que** le matériau de la couche de glissement (8) comprend au moins 5 % en volume, notamment au moins 8 % en volume et en particulier 8 à 12 % en volume de graphite.

**11.** Matériau composite pour palier lisse selon une ou plusieurs des revendications précédentes, **caracté-**

**risé en ce que** le matériau de la couche de glissement (8) comprend au moins 2 % en volume, notamment 2 à 6 % en volume de fibres de carbone.

**12.** Matériau composite pour palier lisse selon une ou plusieurs des revendications précédentes, **caractérisé en ce que** la couche support poreuse (6) est formée de particules de bronze ordinaire, notamment des particules de CuSn (8-12).

**13.** Matériau composite pour palier lisse selon une ou plusieurs des revendications précédentes, **caractérisé en ce que** la couche d'appui (4) est en acier ou en bronze.

**14.** Coussinet lisse fabriqué à partir d'un matériau composite pour palier lisse selon une ou plusieurs des revendications précédentes.

**15.** Coussinet lisse selon la revendication 14 d'un diamètre extérieur compris entre 10 et 15 mm, notamment entre 10 et 13 mm, le matériau de la couche de glissement dépassant de la couche support poreuse de 10 à 30 $\mu$m, notamment de 10 à 25 $\mu$m et en particulier de 12 à 20 $\mu$m, le matériau de la couche de glissement recouvrant intégralement la couche support poreuse.

Fig.1

Fig.2